# EUROPÄISCHE PATENTSCHRIFT

(11) **EP 4 097 948 B1**
(45) Veröffentlichungstag und Bekanntmachung des Hinweises auf die Patenterteilung: **15.05.2024**
(21) Anmeldenummer: 21715153.9
(22) Anmeldetag: 15.03.2021
(51) Int. Cl.: H04L 9/08, H04L 9/40

(54) **VERFAHREN ZUR DATENÜBERMITTLUNG UND KOMMUNIKATIONSSYSTEM**
METHOD FOR DATA TRANSFER AND COMMUNICATION SYSTEM
PROCÉDÉ POUR LE TRANSFERT DE DONNÉES ET SYSTÈME DE COMMUNICATION

(30) Priorität: 27.03.2020 DE 102020204023
(43) Veröffentlichungstag der Anmeldung: 07.12.2022
(73) Patentinhaber: Siemens Mobility GmbH, 81739 München (DE)
(72) Erfinder: JÄHN, Marcel, 38122 Braunschweig (DE); LORENZ, Matthias, 38159 Vechelde (DE); SCHILLING, Benjamin, 38302 Wolfenbüttel (DE)
(74) Vertreter: Siemens Patent Attorneys
(86) Internationale Anmeldenummer: PCT/EP2021/056482
(87) Internationale Veröffentlichungsnummer: WO 2021/190969

(56) Entgegenhaltungen:
- WO-A1-00/29962
- DE-A1- 10 121 819
- US-A1- 2009 157 551
- US-A1- 2010 266 127

## Beschreibung

Es wird ein Verfahren zur Datenübermittlung angegeben mit den Schritten:
A) Einrichten einer Datenverbindung mit einem Verbindungsschlüssel zwischen einem ersten Kommunikationspartner und einem zweiten Kommunikationspartner,
B) Verschlüsseln des Verbindungsschlüssels für die Datenverbindung durch den ersten Kommunikationspartner und/oder durch den zweiten Kommunikationspartner mit einem Zusatzschlüssel,
C) Senden einer Nachricht, die einen unverschlüsselten Teil und einen mit dem Verbindungsschlüssel verschlüsselten Teil enthält, vom ersten Kommunikationspartner zum zweiten Kommunikationspartner,
wobei der unverschlüsselte Teil der Nachricht den mit dem Zusatzschlüssel verschlüsselten Verbindungsschlüssel enthält.

Darüber hinaus wird ein Kommunikationssystem angegeben.

Gattungsgemäße Verfahren zur Datenübermittlung sind aus den Druckschriften DE 101 21 819 A1 und US 2009/157551 A1 bekannt.

Darüber hinaus ist aus der Druckschrift WO 00/29962 A1 ein System und ein Verfahren zum Installieren eines auditierbaren sicheren Netzwerkes bekannt.

Eine zu lösende Aufgabe liegt darin, ein Verfahren zur Datenübermittlung anzugeben, mit dem effizient bei verschlüsselter Kommunikation eine Protokollierung und Überprüfung eines Datenstroms durch einen Dritten ermöglicht ist.

Diese Aufgabe wird unter anderem durch ein Verfahren zur Datenübermittlung und durch ein Kommunikationssystem mit den Merkmalen der unabhängigen Patentansprüche gelöst. Bevorzugte Weiterbildungen sind Gegenstand der abhängigen Ansprüche.

Demnach ist bei einem Verfahren mit den Merkmalen des Oberbegriffes des Anspruches 1 erfindungsgemäß vorgesehen, dass ein dritter Kommunikationspartner bestimmungsgemäß als Zuhörer an der Datenverbindung beteiligt ist,
wobei dem dritten Kommunikationspartner der Zusatzschlüssel bekannt ist, und
in einem Schritt D) der dritte Kommunikationspartner den mit dem Zusatzschlüssel verschlüsselten Verbindungsschlüssel aus dem unverschlüsselten Teil der Nachricht entschlüsselt, sodass dem dritten Kommunikationspartner ermöglicht wird, den verschlüsselten Teil der Nachricht zu lesen.

Der dritte Kommunikationspartner, welcher bestimmungsgemäß als Zuhörer an der Datenverbindung beteiligt ist, kann auch kurz als Dritter bezeichnet werden. Das heißt, der dritte Kommunikationspartner wird gezielt vom ersten und/oder vom zweiten Kommunikationspartner mit in die Datenverbindung einbezogen.

Dem dritten Kommunikationspartner ist der Zusatzschlüssel bekannt. Dies ist dadurch erreichbar, dass der Zusatzschlüssel in verschlüsselter Form in dem unverschlüsselten Teil der Nachricht übermittelt wird, oder dass der Zusatzschlüssel außerhalb dieses Verfahrens bekannt gemacht wird, oder dass der Zusatzschlüssel der öffentliche Teil eines asymmetrischen Schlüsselpaares ist, welches dem dritten Kommunikationspartner zugeteilt ist, zum Beispiel der öffentliche Schlüssel seines X.509 Zertifikats.

Im Schritt D) entschlüsselt der dritte Kommunikationspartner den mit dem Zusatzschlüssel verschlüsselten Verbindungsschlüssel aus dem unverschlüsselten Teil der Nachricht. Somit wird es dem dritten Kommunikationspartner ermöglicht, den verschlüsselten Teil der Nachricht in Echtzeit oder zeitverzögert zu entschlüsseln und somit zu lesen.

Bei dem hier beschriebenen Verfahren erfolgt eine Kommunikation zwischen zwei Kommunikationspartnern, wobei eine Datenverbindung zwischen den Kommunikationspartnern kryptographisch gesichert ist. Ein Schlüssel zur Entschlüsselung von übermittelten Datenpaketen wird von einem der beiden miteinander kommunizierenden Partner einem dritten Kommunikationspartner als Archivstelle oder Inspektionsstelle bekannt gemacht, um die Datenpakete archivieren und/oder auf Schadsoftware überprüfen zu können.

Die Begriffe Verbindungsschlüssel und Zusatzschlüssel beziehen sich nicht notwendigerweise nur auf einen einzelnen Schlüsselteil, sondern umfassen optional auch Schlüsselpaare. Der Verbindungsschlüssel und/oder der Zusatzschlüssel sind somit entweder ein symmetrischer oder ein asymmetrischer Schlüsselteil einer kryptographischen Verbindung oder auch ein Schlüsselpaar aus symmetrischen oder asymmetrischen Schlüsselteilen.

Die meiste digitale Kommunikation ist verschlüsselt. Dies wird üblicherweise mittels TLS erreicht, wobei asymmetrische Schlüssel genutzt werden, um einen symmetrischen Schlüssel zu vereinbaren, der von beiden Kommunikationspartnern zur Verschlüsselung und zur Entschlüsselung benutzt wird. Ein solcher Schlüssel wird auch als Sitzungsschlüssel oder Session Key bezeichnet. Das Vereinbaren des Schlüssels erfolgt insbesondere über einen Diffie-Hellman-Schlüsselaustausch oder einen Diffie-Hellman-Merkle-Schlüsselaustausch, kurz DHM-Schlüsselaustausch oder DHM-Protokoll. TLS steht für Transport Layer Security, also Transportschichtsicherheit. Selbst wenn die Kommunikation einschließlich der Schlüsselvereinbarung abgefangen wird, ist es für einen Lauscher bei einem solchen Vorgehen nicht möglich, die Datenkommunikation zu entschlüsseln. Der vereinbarte symmetrische Schlüssel kann für jede neue Kommunikationsverbindung verschieden sein.

In einigen Fällen, beispielsweise beim Betreiben eines Signalnetzwerks oder für Finanztransaktionen, muss die digitale Kommunikation aus rechtlichen Gründen archiviert werden. Dies wird üblicherweise durch eine archivierende dritte Partei erzielt, die beispielsweise mittels eines Monitor Ports eines Switches die Datenkommunikation aufnimmt und abspeichert. Ist die Datenkommunikation verschlüsselt, so können die archivierten Daten nicht unmittelbar für Audits herangezogen werden und rechtliche und/oder Compliance-Anforderungen können nicht mehr erfüllt werden.

Aus Gründen der IT-Sicherheit ist es oft erforderlich, eine Datenkommunikation zu inspizieren, ob Schadsoftware enthalten ist oder ob der Datenstrom kompromittiert ist, um Angriffe zu detektieren. Dies erfolgt zum Beispiel mittels eines Deep Packet Inspection-Algorithmus und/oder mittels eines NIDS, also mittels eines Network Intrusion Detection-Systems. Auch in diesem Fall wird die Datenkommunikation oft über einen Monitor Port überwacht. Bei einer verschlüsselten Kommunikation jedoch ist etwa eine Deep Packet Inspection nicht mehr möglich und die Fähigkeit, Attacken zu detektieren, ist herabgesetzt.

Alternative Möglichkeiten, einem Dritten eine Datenarchivierung oder Dateninspektion zu ermöglichen, liegen darin, einen Schlüssel über einen separaten Kommunikationskanal zu hinterlegen. Das heißt, ein Kommunikationspartner sendet den beispielsweise symmetrischen Schlüssel, der für die Verschlüsselung benutzt wird, dem Dritten. Hierbei ist jedoch eine zusätzliche Datenverbindung erforderlich.

Eine weitere alternative Möglichkeit liegt darin, mittels einer Chiffre, englisch Cipher, lediglich eine Integrität zu überprüfen. Dies ist aber keine Option, wenn vertrauliche Daten übermittelt werden, beispielsweise persönliche Daten. Außerdem wird dies durch die derzeit existierenden Ciphern in TLS 1.3 nicht mehr unterstützt.

Eine andere alternative Möglichkeit ist darin gegeben, eine symmetrische Verschlüsselung mit einem bekannten Schlüssel zu verwenden. Dies entspricht jedoch nicht mehr dem Stand der Technik für kryptographisch gesicherte Verbindungen.

Schließlich liegt eine alternative Möglichkeit darin, einen Mann-in-der-Mitte-Ansatz und/oder einen Proxy zu verwenden.

Dabei laufen alle Verbindungen über den Dritten und der Dritte bricht die direkte Verbindung zwischen den Kommunikationspartnern auf. Dabei sind beide Kommunikationspartner direkt mit dem Dritten verbunden und nur die Verbindung direkt zum Dritten ist verschlüsselt, so dass keine Ende-zu-Ende-Verschlüsselung mehr vorliegt.

Das hier beschriebene Verfahren weist bevorzugt die folgenden Schritte auf, insbesondere in der angegebenen Reihenfolge:
1. Es erfolgt eine Vereinbarung eines Verbindungsschlüssels, insbesondere eines Sitzungsschlüssels, etwa über einen Schlüsselaustausch wie einem Diffie-Hellman-Schlüsselaustausch.
2. Ein Kommunikationspartner verschlüsselt den Sitzungsschlüssel, so dass dieser nur durch den Dritten entschlüsselt werden kann, beispielsweise mittels eines asymmetrischen Schlüssels mit einem öffentlichen Schlüssel des Dritten. Der Dritte ist beispielsweise eine Archivierungsstelle. Optional wird der Schlüssel eines X.509-Zertifikats des Dritten verwendet. Dies hat den zusätzlichen Vorteil, dass sichergestellt ist, dass außer den ersten und zweiten Kommunikationspartnern als Sender/Empfänger nur der Dritte als Zuhörer den Datenverkehr entschlüsseln kann.
3. Der verschlüsselte Sitzungsschlüssel wird innerhalb der Datenverbindung transparent in einem nicht verschlüsselten Teil des zu Grunde liegenden Kommunikationsprotokolls, zum Beispiel in einer TCP-Option, mit der nächsten Nachricht kommuniziert. Optional wird das X.509-Zertifikat des Dritten ebenso in den TCP-Optionen versendet, so dass der Kommunikationspartner, der den Sitzungsschlüssel nicht versendet hat, entscheiden kann, ob dem Dritten vertraut werden kann.
4. Im Falle einer Archivierungsstelle speichert, protokolliert und/oder archiviert der Dritte bevorzugt die gesamte Datenkommunikation, insbesondere auch die TCP-Option. Optional wird dabei alles verschlüsselt abgespeichert, so dass die enthaltenen Daten nicht verarbeitet werden. Als weitere Option wird der Sitzungsschlüssel extrahiert und separat gespeichert und/oder verarbeitet.
5. Optional entschlüsselt der Dritte die Datenkommunikation in Echtzeit, auch als on the fly bezeichnet, und speichert und/oder verarbeitet die entschlüsselten Daten.

Wie eingangs beschrieben, kann der Dritte nicht nur eine Archivierungsstelle sein, sondern auch eine Überprüfungsstelle, um den Datenstrom auf Attacken zu überprüfen.

Das hier beschriebene Verfahren bietet insbesondere die folgenden Vorteile:
- Die Ende-zu-Ende-Verschlüsselung zwischen den Kommunikationspartnern ist immer noch intakt.
- Lediglich ein Kommunikationspartner braucht das Verfahren zu unterstützen, für den anderen Kommunikationspartner kann die Prozedur transparent sein.
- Es ist nahezu kein zusätzlicher Datenstrom und/oder Overhead erforderlich, so dass die Bandbreite wenig mehr beansprucht wird und kaum zusätzliche Verfahrensschritte durchzuführen sind.
- Das Verfahren kann aus dem Stand zum Beispiel mit existierenden Archivierungssystemen verwendet werden, da alle zusätzlichen Daten innerhalb der Datenverbindung, auch als inline bezeichnet, übertragen werden.
- Es ist kein zusätzlicher Kanal für die Schlüsselübertragung an den Dritten erforderlich.
- Nur vertrauenswürdige Dritte können den Datenverkehr entschlüsseln.
- Optional erfolgt eine Entschlüsselung durch den Dritten nur in gerechtfertigten Fällen, beispielsweise im Falle eines Audits.
- Die archivierten, gespeicherten Daten können unverändert und verschlüsselt abgelegt sein.
- Für den Kommunikationspartner, der den Verbindungsschlüssel nicht an den Dritten übermittelt, ist es optional klar erkennbar, dass der Verbindungsschlüssel dem Dritten mitgeteilt wurde. Dies ist dagegen nicht der Fall, wenn Mann-in-der-Mitte-Ansätze oder Außer-der-Reihe-Ansätze, auch als out-ofband bezeichnet, verwendet werden.
- Mit dem hier beschriebenen Verfahren ist es einfacher, Regeln wie GDPR, General Data Privacy Regulation, zu erfüllen.
- Es ist möglich, eine juristische Anforderungen erfüllende Datenspeicherung auch für einen verschlüsselten Datenverkehr zu erzielen.
- Deep Packet Inspection und NIDS sind mit dem hier beschriebenen Verfahren vereinbar.
- Eine hohe Akzeptanz für das hier beschriebene Verfahren für kryptographische Verbindungen ist möglich, da es für beide Kommunikationspartner offensichtlich ist, dass ein Dritter als Zuhörer in die Kommunikation eingebunden ist und um welchen Dritten es sich handelt. Dies gilt insbesondere, wenn ein X.509-Zertifikat des Dritten in der Nachricht mit übersandt wird. Dagegen werden bisherige Ansätze mit einem Dritten für eine kryptographische Verbindung üblicherweise nicht akzeptiert, da ein geheimes Ausspähen nur schwer verhinderbar ist, anders als bei dem hier beschriebenen Verfahren.
- Es ist möglich, das Verfahren an Anwender zu lizenzieren, die insbesondere rechtliche Erfordernisse zur Archivierung der Kommunikation erfüllen müssen, wie zum Beispiel im Finanzsektor.

Gemäß zumindest einer Ausführungsform protokolliert und/oder inspiziert der dritte Kommunikationspartner die Nachricht insbesondere im Auftrag des ersten Kommunikationspartners und/oder des zweiten Kommunikationspartners. Somit erfüllt der dritte Kommunikationspartner bestimmungsgemäß eine weitere Funktion in der Datenverbindung, insbesondere eine Archivierung und/oder einen Schutz vor Attacken.

Gemäß zumindest einer Ausführungsform speichert der dritte Kommunikationspartner den verschlüsselten Teil der Nachricht und/oder den entschlüsselten Verbindungsschlüssel und/oder den noch mit dem Zusatzschlüssel verschlüsselten Verbindungsschlüssel. Es ist möglich, dass der dritte Kommunikationspartner den verschlüsselten Teil der Nachricht zu einem späteren Zeitpunkt entschlüsselt.

Insbesondere entschlüsselt der dritte Kommunikationspartner den verschlüsselten Teil der Nachricht nur, wenn eine Aufforderung hierzu durch eine zum Beispiel externe Kotrollinstanz erfolgt. Bei der Kontrollinstanz kann es sich um den ersten oder um den zweiten Kommunikationspartner oder auch um eine weitere Instanz handeln.

Gemäß zumindest einer Ausführungsform entschlüsselt der dritte Kommunikationspartner den verschlüsselten Teil der Nachricht mittels des Verbindungsschlüssels in Echtzeit. In Echtzeit bedeutet insbesondere, dass keine oder keine signifikante Zeitverzögerung gegenüber einer Entschlüsselung der Nachricht durch den ersten und/oder durch den zweiten Kommunikators Partner vorliegt. Damit ist ein effektiver Schutz vor Attacken mit Hilfe des dritten Kommunikationspartners gegeben. Es ist möglich, dass eine Entschlüsselung durch den dritten Kommunikationspartner zur Erkennung von Angriffen einer Entschlüsselung der Nachricht durch den Empfänger zeitlich vorangeht. Das heißt, eine Entschlüsselung etwa durch den zweiten Kommunikationspartner erfolgt zum Beispiel erst, wenn eine Freigabe hierzu durch den dritten Kommunikationspartner erfolgt ist.

Gemäß zumindest einer Ausführungsform ist der Zusatzschlüssel ein öffentlicher Schlüssel eines Zertifikats des dritten Kommunikationspartners oder der Zusatzschlüssel enthält einen solchen Schlüssel. Bei dem Zertifikat handelt es sich insbesondere um ein X.509-Zertifikat.

Gemäß zumindest einer Ausführungsform ist der unverschlüsselte Teil der Nachricht mit dem Verbindungsschlüssel ein insbesondere von einem Betreiber der Datenverbindung selbstdefinierter Teil eines Übertragungssteuerungsprotokoll-Vorspanns. Beispielsweise ist dieser Teil der Nachricht eine selbstdefinierte Option in einem TCP-Header. TCP steht dabei für Transmission Control Protocol.

Gemäß zumindest einer Ausführungsform ist der Verbindungsschlüssel ein Sitzungsschlüssel der Datenverbindung. Das heißt, der Verbindungsschlüssel ist nur für eine einzige Sitzung und/oder nur für eine bestimmte Zeit gültig. Der Schritt A) kann somit mehrmals durchgeführt werden, auch mehrmals während des Bestehens der Datenverbindung.

Darüber hinaus wird ein Kommunikationssystem angegeben. Das Kommunikationssystem ist für ein Verfahren eingerichtet, wie in Verbindung mit einer oder mehrerer der oben genannten Ausführungsformen beschrieben. Merkmale des Kommunikationssystems sind daher auch für das Verfahren offenbart und umgekehrt.

In mindestens einer Ausführungsform führt das Kommunikationssystem im Betrieb zumindest zeitweilig ein oben beschriebenes Verfahren durch. Die Datenverbindung ist hierbei eine teilweise oder vollständig drahtlose oder auch eine drahtgebundene Verbindung.

Gemäß zumindest einer Ausführungsform ist das Kommunikationssystem ein Teil einer Schienennetzinfrastruktur. Dabei ist der erste Kommunikationspartner und/oder der zweite Kommunikationspartner bevorzugt aus der folgenden Gruppe ausgewählt: ein Stellwerk, eine Streckenzentrale wie eine ETCS-Streckenzentrale, ein Achszähler, ein Streckensignal, eine Weiche, ein Schienenfahrzeug.

Das heißt, der erste und/oder der zweite Kommunikationspartner kann ein RBC, Radio Block Centre, sein, also eine ETCS-Streckenzentrale, wobei ETCS für European Train Control System steht.

Die oben genannten Eigenschaften, Merkmale und Vorteile der Erfindung und die Art und Weise, wie diese erreicht werden, werden durch die folgende Beschreibung der Ausführungsbeispiele der Erfindung in Verbindung mit den entsprechenden Figuren weitergehend erläutert, wobei
- Figur 1: eine schematische Darstellung eines Ausführungsbeispiels eines hier beschriebenen Kommunikationssystems zeigt,
- Figur 2: ein schematisches Ablaufdiagramm eines Ausführungsbeispiels eines hier beschriebenen Verfahrens zeigt,
- Figur 3: eine schematische Darstellung einer Nachricht für Ausführungsbeispiele von hier beschriebenen Verfahren zeigt, und
- Figur 4: eine schematische Darstellung eines Ausführungsbeispiels eines hier beschriebenen Kommunikationssystems in einer Schienennetzinfrastruktur zeigt.

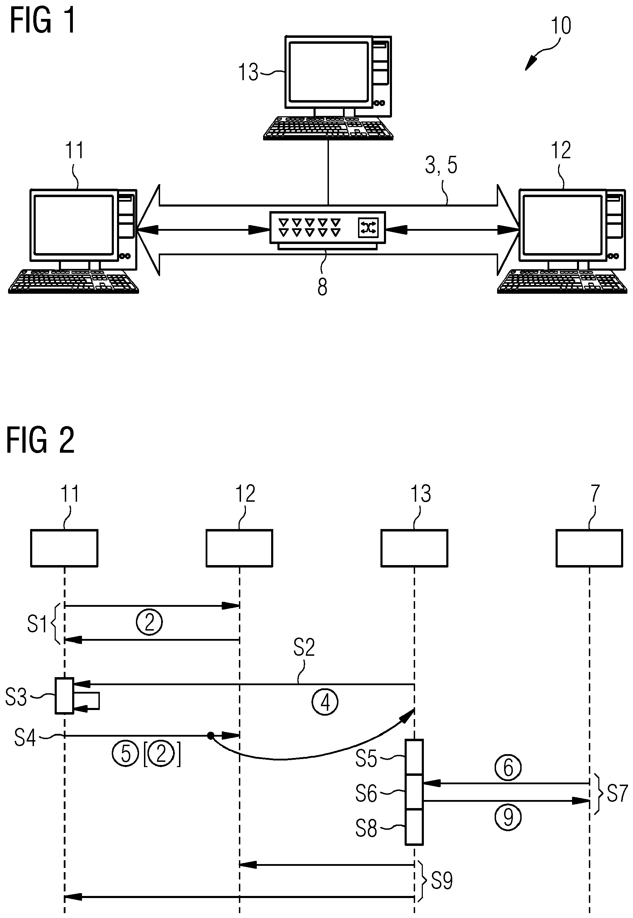

In Figur 1 ist ein Ausführungsbeispiel eines Kommunikationssystems 10 gezeigt. Das Kommunikationssystem 10 umfasst einen ersten Kommunikationspartner 11 sowie einen zweiten Kommunikationspartner 12. Zwischen den Kommunikationspartnern 11, 12 als Sender und Empfänger besteht eine Datenverbindung 3 zum bevorzugt bidirektionalen, verschlüsselten Austausch von Nachrichten 5.

Ferner umfasst das Kommunikationssystem 10 einen dritten Kommunikationspartner 13. Der dritte Kommunikationspartner 13 nimmt an der Datenverbindung 3 über eine Verbindungskomponente 8 Teil. Die Verbindungskomponente 8 ist beispielsweise ein Monitor Port eines Routers. Der dritte Kommunikationspartner 13 archiviert und/oder inspiziert die ausgetauschten Nachrichten 5. Das heißt, der dritte Kommunikationspartner 13 nimmt bevorzugt nicht unmittelbar an der Kommunikation zwischen den Kommunikationspartnern 11, 12 teil und ist ein Zuhörer.

Es ist möglich, dass die Kommunikationspartner 11, 12, 13 automatisch oder teilautomatisch arbeiten. Somit ist nicht notwendigerweise ein Eingriff durch Betriebspersonal in die Kommunikation erforderlich. Die Kommunikationspartner 11, 12, 13 sind zum Beispiel Rechner oder Sensoren oder auch Aktuatoren.

In Figur 2 ist ein Betriebsverfahren für ein Kommunikationssystem 10 beschrieben. In einem ersten Verfahrensschritt S1 wird zwischen dem ersten und dem zweiten Kommunikationspartner 11, 12 ein Verbindungsschlüssel 2, zum Beispiel über einen Diffie-Hellman-Schlüsselaustausch, vereinbart. Der Verbindungsschlüssel 2 ist insbesondere ein Sitzungsschlüssel.

In einem optionalen Verfahrensschritt S2 erhält der erste Kommunikationspartner 11 einen Zusatzschlüssel 4. Zum Beispiel wird der Zusatzschlüssel 4 vom dritten Kommunikationspartner 13 an den ersten Kommunikationspartner 11 übermittelt. Bei dem Zusatzschlüssel 4 handelt es sich beispielsweise um einen öffentlichen Schlüssel eines X.509-Zertifikats des dritten Kommunikationspartners 13.

Im Verfahrensschritt S3 wird der Verbindungsschlüssel 2 von dem ersten Kommunikationspartner 11 mit Hilfe des Zusatzschlüssels 4 verschlüsselt.

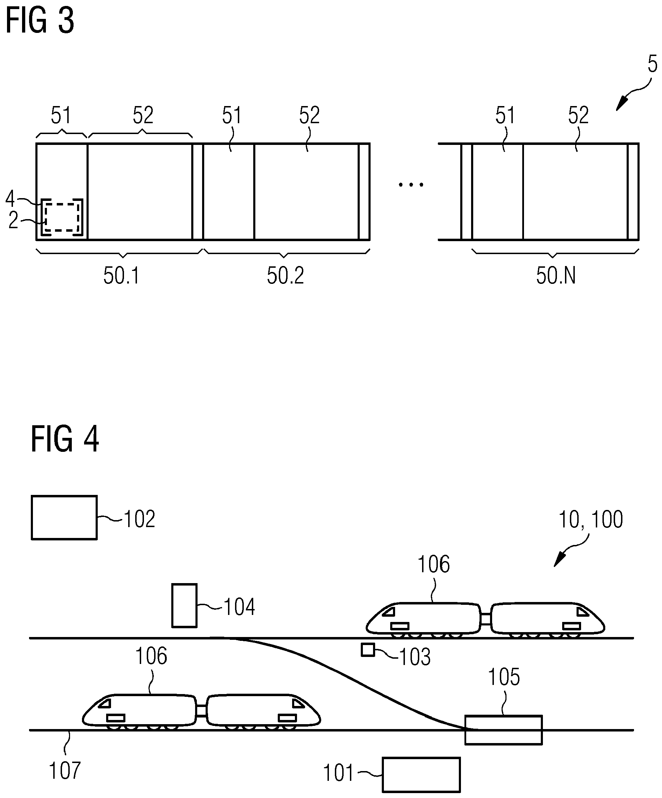

Daraufhin wird im Verfahrensschritt S4 die Nachricht 5 an den zweiten Kommunikationspartner 12 gesendet. Die Nachricht 5 enthält dabei den mit dem Zusatzschlüssel 4 verschlüsselten Verbindungsschlüssel 2. Der verschlüsselte Verbindungschlüssel 2 ist dabei in einem unverschlüsselten Teil der Nachricht 5 enthalten, siehe auch Figur 3. Die verschlüsselten Teile 52 der Nachricht sind mit dem Verbindungsschlüssel 2 verschlüsselt.

Wie in Figur 1 illustriert, geht die Nachricht 5 auch an den dritten Kommunikationspartner 13. Vom dritten Kommunikationspartner 13, dem Zuhörer, können nach Erhalt der Nachricht 5 einer oder mehrere Verfahrensschritte S5, S6, S7, S8, S9 durchgeführt werden.

Im optionalen Verfahrensschritte S5 erfolgt ein Abspeichern der Nachricht 5 und des Verbindungsschlüssels 2. Die Nachricht 5 und/oder der Verbindungsschlüssel 2 können verschlüsselt oder auch entschlüsselt abgespeichert werden. Bevorzugt wird zumindest die Nachricht 5 in diesem Schritt S5 lediglich verschlüsselt und unbearbeitet archiviert. Dadurch, dass der Verbindungsschlüssel 2 zumindest verschlüsselt ebenso hinterlegt wird, kann die Nachricht 5 später entschlüsselt werden.

Das Entschlüsseln der Nachricht 5 erfolgt insbesondere in einem späteren Verfahrensschritte S6. Dabei ist es möglich, dass der Verfahrensschritt S6 lediglich nach Erhalt einer Aufforderung 6 durchgeführt wird. Die Aufforderung 6 er geht dabei in einem Verfahrensschritte S7 durch eine zum Beispiel externe Kontrollinstanz 7. Abweichend von der Darstellung in Figur 2 kann die Kontrollinstanz 7 auch durch den ersten und/oder durch den zweiten Kommunikationspartner 11, 12 verwirklicht sein. Optional gibt der dritte Kommunikationspartner 13 dann eine Auskunft 9 etwa an die Kontrollinstanz 7 zurück. Diese Auskunft 9 kann innerhalb des Verfahrensschritts 7 erteilt werden.

Im optionalen Verfahrensschritte S8 erfolgt durch den dritten Kommunikationspartner 13 eine Überprüfung der Nachricht 5 auf Attacken. Dieses Überprüfen kann in Echtzeit durchgeführt werden.

Weiterhin ist in Figur 2 ein optionaler Verfahrensschritt S9 illustriert. Im Verfahrensschritte S9 erfolgt eine Rückmeldung durch den dritten Kommunikationspartner 13 an den ersten und/oder an den zweiten Kommunikationspartner 12. Die Rückmeldung kann beispielsweise enthalten, dass die Nachricht 5 korrekt von dritten Kommunikationspartner 13 erhalten wurde und dass aus Sicht des dritten Kommunikationspartners 13 kein erneutes Senden der Nachricht 5 erforderlich ist. Alternativ oder zusätzlich gibt die Rückmeldung an, dass in der Nachricht 5 keine Attacke enthalten ist und/oder dass die Nachricht 5 vom zweiten Kommunikationspartner 12 als Empfänger der Nachricht 5 gefahrlos entschlüsselt werden kann.

In Figur 3 ist schematisch ein beispielhafter Aufbau der Nachricht 5 illustriert. Die Nachricht 5 umfasst N Datenpakete 50.1, 50.2 bis 50.N, wobei N eine natürliche Zahl größer oder gleich Eins ist. Die Datenpakete enthalten bevorzugt jeweils einen unverschlüsselten Teil 51 und einen verschlüsselten Teil 52. Abweichend von der Darstellung in Figur 3 ist es ebenso möglich, dass lediglich das erste Datenpaket 50.1 oder nur einige der Datenpakete einen unverschlüsselten Teil 51 enthalten. Die verschlüsselten Teile 52 enthalten je eine Nutzlast des betreffenden Datenpakets, die unverschlüsselten Teile 51 stellen bevorzugt jeweils einen Vorspann, englisch Overhead oder Header, dar.

Insbesondere im unverschlüsselten Teil 51 nur des ersten Datenpakets 50.1 ist der mit dem Zusatzschlüssel 4 verschlüsselte Verbindungsschlüssel 2 enthalten. Dieser Bereich des unverschlüsselten Teils 51 ist insbesondere eine selbstdefinierte TCP-Option. Abweichend von der Darstellung der Figur 3 kann der verschlüsselte Verbindungsschlüssel 2 auch mehrmals übertragen werden.

Da der Zusatzschlüssel 4 dem dritten Kommunikationspartner 13 bekannt ist und sich der Verbindungsschlüssel 2 im unverschlüsselten Teil 51 befindet, kann der dritte Kommunikationspartner 13 den Verbindungsschlüssel 2 entschlüsseln und damit auch auf die verschlüsselten Teile 52 der Nachricht 5 zugreifen.

In Figur 4 ist eine Schienennetzinfrastruktur 100 dargestellt. Die Schienennetzinfrastruktur 100 umfasst das Kommunikationssystem 10 und ein Schienennetz 107. Die ersten, zweiten und/oder dritten Kommunikationspartner sind in der Schienennetzinfrastruktur 100 insbesondere durch Stellwerke 101, durch eine ETCS-Streckenzentrale 102, durch Achszähler 103, durch Streckensignale 104, durch Weichen 105 und/oder durch Schienenfahrzeuge 106 gebildet.

Aufgrund des dritten Kommunikationspartners 13 kann ein Datenverkehr zwischen den Komponenten der Schienennetzinfrastruktur 100 protokolliert und aufgezeichnet werden. Die Datenverbindung zwischen den Komponenten der Schienennetzinfrastruktur 100 ist drahtgebunden oder auch drahtlos.

Obwohl die Erfindung anhand von Ausführungsbeispielen detailliert dargestellt und beschrieben wurde, ist die Erfindung nicht auf die offenbarten Ausführungsbeispiele und die darin erläuterten konkreten Merkmalskombinationen beschränkt. Weitere Variationen der Erfindung können von einem Fachmann erhalten werden, ohne den Schutzumfang der beanspruchten Erfindung zu verlassen.

### Bezugszeichenliste

- 2: Verbindungsschlüssel für die Datenverbindung
- 3: Datenverbindung
- 4: Zusatzschlüssel
- 5: Nachricht
- 50.1, 50.2, 50.N: Datenpaket der Nachricht
- 51: unverschlüsselter Teil der Nachricht
- 52: verschlüsselter Teil der Nachricht
- 6: Aufforderung zur Entschlüsselung der Nachricht
- 7: Kotrollinstanz
- 8: Verbindungskomponente
- 9: Auskunft über die Nachricht
- 10: Kommunikationssystem
- 11: erster Kommunikationspartner (Sender)
- 12: zweiter Kommunikationspartner (Empfänger)
- 13: dritter Kommunikationspartner (Zuhörer)
- 100: Schienennetzinfrastruktur
- 101: Stellwerk
- 102: ETCS-Streckenzentrale
- 103: Achszähler
- 104: Streckensignal
- 105: Weiche
- 106: Schienenfahrzeug
- 107: Schienennetz
- S1 - S9: Verfahrensschritte

## Patentansprüche

1. Verfahren zur Datenübermittlung mit den Schritten:
A) Einrichten einer Datenverbindung (3) mit einem Verbindungsschlüssel (2) zwischen einem ersten Kommunikationspartner (11) und einem zweiten Kommunikationspartner (12),
B) Verschlüsseln des Verbindungsschlüssels (2) für die Datenverbindung (3) durch den ersten Kommunikationspartner (11) und/oder durch den zweiten Kommunikationspartner (11, 12) mit einem Zusatzschlüssel (4),
C) Senden einer Nachricht (5), die einen unverschlüsselten Teil (51) und einen mit dem Verbindungsschlüssel (2) verschlüsselten Teil (52) enthält, vom ersten Kommunikationspartner (11) zum zweiten Kommunikationspartner (12),
wobei der unverschlüsselte Teil (51) der Nachricht (5) den mit dem Zusatzschlüssel (4) verschlüsselten Verbindungsschlüssel (2) enthält
**dadurch gekennzeichnet, dass** ein dritter Kommunikationspartner (13) bestimmungsgemäß als Zuhörer an der Datenverbindung (3) beteiligt ist,
wobei dem dritten Kommunikationspartner (13) der Zusatzschlüssel (4) bekannt ist, und
in einem Schritt D) der dritte Kommunikationspartner (13) den mit dem Zusatzschlüssel (4) verschlüsselten Verbindungsschlüssel (2) aus dem unverschlüsselten Teil (51) der Nachricht (5) entschlüsselt, sodass dem dritten Kommunikationspartner (13) ermöglicht wird, den verschlüsselten Teil (52) der Nachricht (5) zu lesen.

2. Verfahren nach Anspruch 1,
bei dem der dritte Kommunikationspartner (13) die Nachricht (5) im Auftrag des ersten Kommunikationspartners (11) und/oder des zweiten Kommunikationspartners (12) protokolliert und/oder inspiziert.

3. Verfahren nach einem der Ansprüche 1 oder 2,
bei dem der dritte Kommunikationspartner (13) den verschlüsselten Teil (52) der Nachricht (5) und den entschlüsselten Verbindungsschlüssel (2) und/oder den noch mit dem Zusatzschlüssel (4) verschlüsselten Verbindungsschlüssel (2) speichert,
wobei der dritte Kommunikationspartner (13) den verschlüsselten Teil (52) der Nachricht (5) nur entschlüsselt, wenn eine Aufforderung (6) hierzu durch eine Kotrollinstanz (7) erfolgt.

4. Verfahren nach einem der Ansprüche 1 oder 2,
bei dem der dritte Kommunikationspartner (13) den verschlüsselten Teil (52) der Nachricht (5) mittels des Verbindungsschlüssels (2) in Echtzeit entschlüsselt.

5. Verfahren nach einem der Ansprüche 1 bis 4,
bei dem der Zusatzschlüssel (4) ein öffentlicher Schlüssel eines Zertifikats (8) des dritten Kommunikationspartners (13) ist oder einen solchen Schlüssel enthält.

6. Verfahren nach einem der Ansprüche 1 bis 5,
bei dem der unverschlüsselte Teil (51) der Nachricht (5) mit dem Verbindungsschlüssel (2) ein von einem Betreiber der Datenverbindung (3) selbstdefinierter Teil eines Übertragungssteuerungsprotokoll-Vorspanns ist.

7. Verfahren nach einem der Ansprüche 1 bis 6,
bei dem der Verbindungsschlüssel (2) ein Sitzungsschlüssel der Datenverbindung (3) ist.

8. Kommunikationssystem (10), das für ein Verfahren nach einem der Ansprüche 1 bis 7 eingerichtet ist,
wobei die Datenverbindung (3) eine zumindest teilweise drahtlose oder eine drahtgebundene Verbindung ist.

9. Kommunikationssystem (10) nach Anspruch 8,
das Teil einer Schienennetzinfrastruktur (100) ist,
wobei der erste Kommunikationspartner (11) und/oder der zweite Kommunikationspartner (12) aus der folgenden Gruppe ausgewählt sind: Stellwerk (101), ETCS-Streckenzentrale (102), Achszähler (103), Streckensignal (104), Weiche (105), Schienenfahrzeug (106).

## Claims

1. Method for data transfer, with the following steps:
A) establishing a data connection (3) with a connection key (2) between a first communication partner (11) and a second communication partner (12),
B) encrypting the connection key (2) for the data connection (3) by the first communication partner (11) and/or by the second communication partner (11, 12) with an additional key (4),
C) sending a message (5) containing an unencrypted part (51) and a part (52) encrypted with the connection key (2) from the first communication partner (11) to the second communication partner (12), wherein the unencrypted part (51) of the message (5) contains the connection key (2) encrypted with the additional key (4),
**characterised in that**
a third communication partner (13) is intentionally participating as a listener in the data connection (3), wherein the additional key (4) is known to the third communication partner (13), and
in a step D), the third communication partner (13) decrypts the connection key (2) encrypted with the additional key (4) from the unencrypted part (51) of the message (5), so it is possible for the third communication partner (13) to read the encrypted part (52) of the message (5).

2. Method according to claim 1,
in which the third communication partner (13) logs and/or inspects the message (5) on behalf of the first communication partner (11) and/or of the second communication partner (12).

3. Method according to one of claims 1 or 2,
in which the third communication partner (13) stores the encrypted part (52) of the message (5) and the decrypted connection key (2) and/or the connection key (2) still encrypted with the additional key (4),
wherein the third communication partner (13) only decrypts the encrypted part (52) of the message (5) when a request (6) for this is made by a supervisory authority (7).

4. Method according to one of claims 1 or 2,
in which the third communication partner (13) decrypts the encrypted part (52) of the message (5) in real time by means of the connection key (2).

5. Method according to one of claims1 to 4,
in which the additional key (4) is a public key of a certificate (8) of the third communication partner (13) or contains such a key.

6. Method according to one of claims 1 to 5,
in which the unencrypted part (51) of the message (5) with the connection key (2) is a part of a transmission control protocol overhead which is self-defined by an operator of the data connection (3).

7. Method according to one of claims 1 to 6,
in which the connection key (2) is a session key of the data connection (3).

8. Communication system (10), which is adapted for a method according to one of claims 1 to 7,
wherein the data connection (3) is an at least partially wireless or wired connection.

9. Communication system (10) according to claim 8,
which is part of a rail network infrastructure (100),
wherein the first communication partner (11) and/or the second communication partner (12) is/are selected from the following group: interlocking (101), ETCS control centre (102), axle counter (103), trackside signal (104), points (105), rail vehicle (106).

## Revendications

1. Procédé de transfert de données comprenant les stades :
A) établissement d'une liaison (3) de données avec une clé (2) de liaison entre un premier partenaire (11) de communication et un deuxième partenaire (12) de communication,
B) chiffrement de la clé (2) de liaison pour la liaison (3) de données par le premier partenaire (11) de communication et/ou par le deuxième partenaire (11, 12) de communication par une clé (4) supplémentaire,
C) envoi d'un message (5), qui contient une partie (51) non chiffrée et une partie (52) chiffrée par la clé (2) de liaison du premier partenaire (11) de communication au deuxième partenaire (12) de communication,
dans lequel la partie (51) non chiffrée du message (5) contient la clé (2) de liaison chiffrée par la clé (4) supplémentaire, **caractérisé en ce qu'**
un troisième partenaire (13) de communication participe, conformément aux prescriptions, comme auditeur à la liaison (3) de données,
dans lequel la clé (4) supplémentaire est connue du troisième partenaire (13) de communication et
dans un stade D), le troisième partenaire (13) de communication déchiffre la clé (2) de liaison chiffrée par la clé (4) supplémentaire, à partir de la partie (51) non chiffrée du message (5), de sorte qu'il devient possible au troisième partenaire (13) de communication de lire la partie (52) chiffrée du message (5).

2. Procédé suivant la revendication 1,
dans lequel le troisième partenaire (13) de communication rend compte et/ou contrôle le message (5) sur instruction du premier partenaire (11) de communication et/ou du deuxième partenaire (12) de communication.

3. Procédé suivant l'une des revendications 1 ou 2,
dans lequel le troisième partenaire (13) de communication met en mémoire la partie (52) chiffrée du message (5) et la clé (2) de liaison déchiffrée et/ou la clé (2) de liaison encore chiffrée par la clé (4) supplémentaire,
dans lequel le troisième partenaire (13) de communication ne déchiffre la partie (52) chiffrée du message (5), que s'il y est invité (6) par une instance (7) de contrôle.

4. Procédé suivant l'une des revendications 1 ou 2,
dans lequel le troisième partenaire (13) de communication déchiffre, en temps réel au moyen de la clé (2) de liaison, la partie (52) chiffrée du message (5).

5. Procédé suivant l'une des revendications 1 à 4,
dans lequel la clé (4) supplémentaire est une clé publique d'un certificat (8) du troisième partenaire (13) de communication ou contient une clé de ce genre.

6. Procédé suivant l'une des revendications 1 à 5,
dans lequel la partie (51) non chiffrée du message (5) ayant la clé (2) de liaison est une partie, auto-définie par un utilisateur de la liaison (3) de données, d'un relais de compterendu de commande de transfert.

7. Procédé suivant l'une des revendications 1 à 6,
dans lequel la clé (2) de liaison est une clé de session de la liaison (3) de données.

8. Système (10) de communication, qui est agencé pour un procédé suivant l'une des revendications 1 à 7,
dans lequel la liaison (3) de données est une liaison sans fil au moins en partie ou une liaison par fil.

9. Système (10) de communication suivant la revendication 8, qui fait partie d'une infrastructure (100) de réseau ferroviaire, dans lequel le premier partenaire (11) de communication et/ou le deuxième partenaire (12) de communication est choisi dans le groupe suivant : poste (101) d'aiguillage, centrale (102) de voie ETCS, compteur (103) d'essieux, signal (104) de voie, aiguillage (105), véhicule (106) ferroviaire.
